(19) Europäisches Patentamt / European Patent Office / Office européen des brevets

(11) **EP 4 407 072 A1**

(12) **EUROPEAN PATENT APPLICATION**
published in accordance with Art. 153(4) EPC

(43) Date of publication:
**31.07.2024 Bulletin 2024/31**

(21) Application number: **22872760.8**

(22) Date of filing: **12.09.2022**

(51) International Patent Classification (IPC):
*C25B 13/08* (2006.01)    *C02F 1/461* (2023.01)
*C25B 1/04* (2021.01)    *C25B 9/00* (2021.01)
*C25B 13/02* (2006.01)    *C25B 13/04* (2021.01)

(52) Cooperative Patent Classification (CPC):
**C02F 1/461; C25B 1/04; C25B 9/00; C25B 13/02;
C25B 13/04; C25B 13/08;** Y02E 60/36

(86) International application number:
**PCT/JP2022/034076**

(87) International publication number:
**WO 2023/048006 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 24.09.2021  JP 2021155606
          15.02.2022  JP 2022021467
          03.03.2022  JP 2022032943

(71) Applicant: **Nippon Shokubai Co., Ltd.
Osaka-shi, Osaka 541-0043 (JP)**

(72) Inventor: **NAKAYAMA, Shinya
Suita-shi, Osaka 564-0034 (JP)**

(74) Representative: **Cabinet Beau de Loménie
158, rue de l'Université
75340 Paris Cedex 07 (FR)**

(54) **METHOD FOR PRODUCING DIAPHRAGM FOR ALKALINE WATER ELECTROLYSIS USE, AND DIAPHRAGM FOR ALKALINE WATER ELECTROLYSIS USE**

(57)    Provided is a method of producing a diaphragm for alkaline water electrolysis in which formation of macrovoids is suppressed. The present invention relates to a method of producing a diaphragm for alkaline water electrolysis that includes a porous layer, the method including a step of obtaining the porous layer using a composition that contains an organic polymer, inorganic particles, a solvent, and a compound represented by the following formula (1): R-X (1), wherein R represents a hydrocarbon group having six or more carbon atoms and X represents a hydrophilic functional group.

FIG. 1

## EP 4 407 072 A1

**Description**

TECHNICAL FIELD

The present invention relates to a method of producing a diaphragm for alkaline water electrolysis and a diaphragm for alkaline water electrolysis.

BACKGROUND ART

Alkaline water electrolysis (electrolysis of alkaline water) is known as a method of industrially producing hydrogen gas. Alkaline water electrolysis is usually performed by applying a current to water containing sodium hydroxide, potassium hydroxide, or the like. Such alkaline water electrolysis uses an electrolytic cell including an anode compartment in which an anode is arranged and a cathode compartment in which a cathode is arranged, where these compartments are separated by a diaphragm for alkaline water electrolysis (hereinafter also referred to as a diaphragm).

In alkaline water electrolysis, electrons (or ions) move from the cathode compartment to the anode compartment. Thus, the diaphragm needs to have high ionic conductivity. Alkaline water electrolysis is carried out using alkaline water with a high alkali concentration of about 30% at 80°C to 100°C optionally under a high pressure of 1 MPa or higher. Thus, the diaphragm also needs to have heat resistance, alkali resistance, and the like.

A known diaphragm is one prepared by incorporating inorganic particles such as particulate magnesium hydroxide into a porous membrane made of an organic polymer such as polysulfone. A known method of producing such a diaphragm is a method using a non-solvent induced phase separation method (NIPS method) (see, for example, Patent Literature 1) .

CITATION LIST

- Patent Literature

Patent Literature 1: WO 2019/021774

SUMMARY OF INVENTION

- Technical Problem

As a result of extensive studies, it has been found that macrovoids are likely to be formed in diaphragms obtained by the non-solvent induced phase separation method (NIPS method). The presence of macrovoids may cause fluctuations in ionic conductivity.

The present invention has been made in view of the above problems and aims to provide a method of producing a diaphragm for alkaline water electrolysis in which formation of macrovoids is suppressed.

- Solution to Problem

The present invention relates to a method of producing a diaphragm for alkaline water electrolysis that includes a porous layer, the method including
a step of obtaining the porous layer using a composition that contains an organic polymer, inorganic particles, a solvent, and a compound represented by the following formula (1):

$$R-X \qquad (1)$$

wherein R represents a hydrocarbon group having six or more carbon atoms and X represents a hydrophilic functional group.

Preferably, an amount of the compound represented by the formula (1) in the composition is 2 to 30% by mass per 100% by mass of a total amount of the organic polymer and the inorganic particles.

The present invention also relates to a diaphragm for alkaline water electrolysis, including

a porous layer that contains an organic polymer and inorganic particles,
wherein paired main surfaces of the porous layer define front and back surfaces of the diaphragm for alkaline water electrolysis,
wherein when a cross section of the porous layer is trisected in its thickness direction into three cross-sectional layers having the same thickness, two of the cross-sectional layers including the front and back surfaces of the diaphragm for alkaline water electrolysis define a surface layer and a back layer, and the other cross-sectional layer defines an inner layer, and
wherein the inner layer has a larger average pore size than at least one of the surface layer or the back layer.

The present invention also relates to a diaphragm for alkaline water electrolysis, including:

a porous layer that contains an organic polymer and inorganic particles; and
a porous support,
the porous layer including a non-impregnation layer which is not included in the porous support,
wherein when a cross section of the non-impregnation layer is trisected in its thickness direction into three cross-sectional layers having the same thickness, a cross-sectional layer including a surface of the diaphragm for alkaline water electrolysis defines a surface layer and the two cross-sectional layers other than the surface layer define inner layers, and
wherein at least one of the inner layers has a larger average pore size than the surface layer.

The present invention also relates to a diaphragm for alkaline water electrolysis, including:

a porous layer that contains an organic polymer and inorganic particles; and
a porous support,
the porous layer including an impregnation layer which is included in the porous support and a non-impregnation layer which is not included in the porous support,
wherein when a cross-section of the non-impregnation layer is trisected in its thickness direction into three cross-sectional layers having the same thickness, one cross-sectional layer including a surface of the diaphragm for alkaline water electrolysis defines a surface layer and the two cross-sectional layers other than the surface layer define inner layers, and
wherein at least one of the inner layers has a larger average pore size than the impregnation layer.

Preferably, at least one of the inner layers has a larger average pore size than the surface layer.

- Advantageous Effects of Invention

The present invention enables production of a diaphragm for alkaline water electrolysis including a porous layer in which formation of macrovoids is suppressed.

BRIEF DESCRIPTION OF DRAWINGS

FIG. 1 shows a photograph (observed image) of a cross section (mainly a non-impregnation layer) of a diaphragm for alkaline water electrolysis taken using a scanning electron microscope, with reference lines and the like added.
FIG. 2 shows a photograph (observed image) of a cross section (mainly an impregnation layer) of a diaphragm for alkaline water electrolysis taken using a scanning electron microscope, with reference lines and the like added.

DESCRIPTION OF EMBODIMENTS

The present invention is described in detail below. Herein, the numerical range indicated as "∘ to Δ" refers to the range of "∘ or more and Δ or less". For example, the numerical range indicated as "35 to 400 nm" refers to the range of "35 nm or more and 400 nm or less".

1. Method of producing diaphragm for alkaline water electrolysis

The method of producing a diaphragm for alkaline water electrolysis of the present invention is described. The method of producing a diaphragm for alkaline water electrolysis of the present invention is a method of producing a diaphragm for alkaline water electrolysis that includes a porous layer, the method including a step of obtaining the porous layer using a composition that contains an organic polymer, inorganic particles, a solvent, and a compound represented by the following formula (1):

R-X          (1)

wherein R represents a hydrocarbon group having six or more carbon atoms and X represents a hydrophilic functional group.

The method of producing a diaphragm for alkaline water electrolysis of the present invention is also referred to as a production method of the present invention. The compound represented by the formula (1) is also referred to as a compound (A), and the composition is also referred to as a composition (P).

Examples of the organic polymer include fluororesins, olefin resins, and aromatic hydrocarbon resins.

Examples of the fluororesins include an ethylenetetrafluoroethylene copolymer, polyvinylidene fluoride, polyvinyl fluoride, a vinylidene fluoridehexafluoropropylene copolymer, a tetrafluoroethylenehexafluoropropylene copolymer, polytetrafluoroethylene, a tetrafluoroethylene-perfluoroalkyl vinyl ether copolymer, polychlorotrifluoroethylene, and a tetrafluoroethylenehexafluoropropylene-vinylidene fluoride copolymer.

Examples of the olefin resins include polyethylene, polypropylene, polybutene, and polymethylpentene.

Examples of the aromatic hydrocarbon resins include polyethylene terephthalate, polybutylene terephthalate, polybutylene naphthalate, polystyrene, polysulfone, polyethersulfone, polyphenylene sulfide, polyphenylsulfone, polyarylate, polyetherimide, polyimide, and polyamideimide.

The composition may contain one or more organic polymers selected from the above-listed fluororesins, olefin resins, and aromatic hydrocarbon resins. To achieve excellent heat resistance, excellent pressure resistance, and excellent alkali resistance, the composition preferably contains an aromatic hydrocarbon resin, more preferably contains at least one selected from polysulfone, polyethersulfone, and polyphenylsulfone. Polysulfone is still more preferred because it is easily soluble in a solvent.

Examples of the inorganic particles include hydroxides or oxides of metals such as magnesium, zirconium, titanium, zinc, aluminum, and tantalum; sulfates such as calcium sulfate, barium sulfate, lead sulfate, and strontium sulfate; nitrides such as titanium nitride, zirconium nitride, and hafnium nitride; and carbides such as titanium carbide, zirconium carbide, and hafnium carbide.

The composition may contain one or more of inorganic particles selected from the above-listed metal hydroxides, metal oxides, sulfates, nitrides, and carbides. To increase the ionic conductivity of the diaphragm for alkaline water electrolysis, the composition preferably contains a metal hydroxide or a metal oxide, more preferably contains magnesium hydroxide, zirconium hydroxide, titanium hydroxide, zirconium oxide, or titanium oxide, still more preferably contains magnesium hydroxide, zirconium hydroxide, titanium hydroxide, or titanium oxide, still further more preferably contains magnesium hydroxide, zirconium hydroxide, or titanium hydroxide, particularly preferably contains magnesium hydroxide.

The inorganic particles may be subjected to surface treatment. An example of the surface treatment is a known surface treatment using a silane coupling agent, stearic acid, oleic acid, a phosphoric acid ester, or the like.

The inorganic particles may have any shape. For example, the inorganic particles may have an irregular, particulate, granular, flake, plate (e.g., hexagonal platelike), or fibrous shape. To increase the adhesion of the inorganic particles to the organic polymer, the inorganic particles preferably have a particulate, flake, or plate shape, more preferably a flake or plate shape, still more preferably a flake shape. To increase the strength of the diaphragm for alkaline water electrolysis, the inorganic particles preferably have a flake or plate shape, more preferably a flake shape.

The inorganic particles may have any average particle size. To increase the strength of the diaphragm for alkaline water electrolysis, the average particle size of the inorganic particles is preferably 0.05 um or more and 2.0 um or less. The average particle size of the inorganic particles is more preferably 0.08 um or more and 1.5 um or less, still more preferably 0.1 um or more and 1 um or less.

The average particle size means the volume average particle size (D50) determined by particle size distribution measurement using a laser diffraction method. Specifically, the average particle size is determined as follows: the particle size distribution is determined using a laser diffraction/scattering particle size distribution analyzer (e.g., Model number: "LA-920" available from Horiba, Ltd.), and the median size (D50) in the particle size distribution based on volume is determined as the average particle size. The particles are mixed with ethanol and dispersed therein by ultrasonic irradiation to prepare a measurement sample.

The inorganic particles may have any aspect ratio. To increase the ionic conductivity of the diaphragm for alkaline water electrolysis, the aspect ratio of the inorganic particles is preferably 2.0 or more and 8.0 or less. The aspect ratio of the inorganic particles is more preferably 2.5 or more and 7.0 or less, still more preferably 3.0 or more and 6.0 or less.

The aspect ratio means the ratio [(a)/(b)] of the longest diameter (a) to the shortest diameter (b). The inorganic particles are observed with a scanning electron microscope (SEM) to obtain an image, and the ratio [(a)/(b)] is measured for each of 10 arbitrary inorganic particles in the image using analysis software. The average value of the ratios [(a)/(b)] of the 10 inorganic particles is defined as the aspect ratio of the inorganic particles. Usually, the shortest among the diameters perpendicular to the longest diameter is defined as the shortest diameter (b).

Again, the inorganic particles are preferably particulate magnesium hydroxide to obtain a diaphragm for alkaline water electrolysis having excellent alkali resistance and excellent durability at a relatively low cost. As described above, the average particle size of the particulate magnesium hydroxide is preferably 0.05 um or more and 2.0 um or less. As described above, the aspect ratio of the particulate magnesium hydroxide is preferably 2.0 or more and 8.0 or less.

Preferably, the magnesium hydroxide has a crystallite size of 35 nm or more in the direction perpendicular to the (110) plane measured by X-ray diffraction. In this way, the ionic conductivity of the diaphragm for alkaline water electrolysis can be further increased. In particular, the crystallite size is more preferably 40 nm or more, still more preferably 50 nm or more, even more preferably 60 nm or more, particularly preferably 65 nm or more. The upper limit of the crystallite size is usually, but not limited to, 400 nm or less, preferably 350 nm or less, still more preferably 300 nm or less.

In other words, the magnesium hydroxide preferably has a crystallite size of 35 to 400 nm in the direction perpendicular to the (110) plane measured by X-ray diffraction. The crystallite size is more preferably 40 to 350 nm, still more preferably 50 to 300 nm, even more preferably 60 to 300 nm, particularly preferably 65 to 300 nm.

The magnesium hydroxide preferably has a crystallite size of 15 nm or more in the direction perpendicular to the (001) plane determined by X-ray diffraction. In this way, the ionic conductivity of the diaphragm for alkaline water electrolysis can be further increased. In particular, the crystallite size is more preferably 18 nm or more, still more preferably 21 nm or more, even more preferably 24 nm or more. The upper limit of the crystallite size is usually, but not limited to, 300 nm or less, preferably 250 nm or less, still more preferably 200 nm or less.

In other words, the magnesium hydroxide preferably has a crystallite size of 15 to 300 nm in the direction perpendicular to the (001) plane measured by X-ray diffraction. The crystallite size is more preferably 18 to 250 nm, still more preferably 21 to 200 nm, even more preferably 24 to 200 nm.

The crystallite size is determined by the powder X-ray diffraction method. The X-ray diffraction pattern of particulate magnesium hydroxide is measured, and the crystallite size (crystallite size in the direction perpendicular to the lattice plane) is calculated using the Scherrer formula from the breadth (half width) of the diffraction line attributed to the corresponding lattice plane.

Magnesium hydroxide having a crystallite size within the above-described specific range can be obtained in the following manner, for example. Specifically, an aqueous solution of magnesium salt (e.g., magnesium chloride, magnesium nitrate) or an aqueous dispersion of magnesium oxide obtained by a conventionally known method is used as a raw material, to the raw material is added an alkaline substance (e.g., lithium hydroxide, sodium hydroxide, calcium hydroxide, ammonia water), and a hydration reaction is performed to prepare magnesium hydroxide. Here, an organic acid such as formic acid, acetic acid, or propionic acid, a polybasic acid such as nitric acid or sulfuric acid, or a mixture thereof may be added to adjust the solubility of the produced magnesium hydroxide or to appropriately adjust the temperature of the hydrothermal reaction (e.g., from 150°C to 270°C) and the duration of the hydrothermal reaction (e.g., 30 minutes to 10 hours). Thereby, particles of different crystallite sizes can be prepared. Addition of a greater amount of such an acid can lead to faster crystal growth and greater crystallite size. A higher temperature of the hydrothermal reaction or a longer reaction duration of the hydrothermal reaction leads to faster crystal growth and greater crystallite size.

The inorganic particles may be those commercially available. Examples of usable commercial magnesium hydroxide include 200-06H available from Kyowa Chemical Industry Co., Ltd., UP650-1 available from Ube Material Industries, Ltd., MAGSTAR #20 available from Tateho Chemical Industries Co., Ltd., and #200 available from Konoshima Chemical Co., Ltd.

The compound (A) is represented by the following formula (1):

$$R-X \qquad (1).$$

R in the formula (1) is a hydrocarbon group having six or more carbon atoms. The hydrocarbon group is not limited. Examples of the hydrocarbon group include an aliphatic hydrocarbon group, an aromatic hydrocarbon group, a saturated hydrocarbon group, an unsaturated hydrocarbon group, an acyclic hydrocarbon group, and a cyclic hydrocarbon group.

The hydrocarbon group is preferably an alkyl group, an alkenyl group, an aryl group, or an aromatic alkyl group.

Examples of the alkyl group include acyclic alkyl groups such as hexyl, 3-methylpentyl, 2,2-dimethylbutyl, 2,3-dimethylbutyl, heptyl, octyl, 1-methylheptyl, 2-ethylhexyl, nonyl, decyl, undecyl, dodecyl, tridecyl, tetradecyl, pentadecyl, hexadecyl, heptadecyl, and octadecyl groups, and cyclic alkyl groups such as a cyclohexyl group. The alkyl group is preferably a C6-C18 alkyl group, more preferably a C6-C12 alkyl group, still more preferably a C6-C10 alkyl group.

The alkenyl group is a group prepared by replacing one C-C single bond in any of the listed alkyl groups by a double bond. The alkenyl group is preferably a C6-C18 alkenyl group, more preferably a C6-C18 alkenyl group.

Examples of the aryl group include phenyl, tolyl, xylyl, naphthyl, anthryl, biphenyl, and triphenyl groups. Preferred are phenyl, tolyl, and xylyl groups. The aryl group is preferably a C6-C18 aryl group, more preferably a C6-C12 aryl group.

Examples of the aromatic alkyl group include benzyl, phenethyl, phenylpropyl, phenylpentyl, phenylhexyl, and phenyloctyl groups. The aromatic alkyl group is preferably a C6-C18 aromatic alkyl group, more preferably a C6-C12 aromatic alkyl group, still more preferably a C6-C10 aromatic alkyl group.

The hydrocarbon group is preferably a C6-C12 hydrocarbon group. The hydrocarbon group is more preferably at least one selected from C6-C12 alkyl groups, C6-C12 alkenyl groups, C6-C12 aryl groups, and C6-C12 aromatic alkyl groups. The hydrocarbon group is preferably at least one selected from alkyl groups and aromatic alkyl groups, more preferably at least one selected from C6-C12 alkyl groups and C6-C12 aromatic alkyl groups, still more preferably at least one selected from C6-C10 alkyl groups and C6-C10 aromatic alkyl groups, further more preferably at least one selected from C6-C10 alkyl groups.

The hydrocarbon group may have a substituent. Examples of the substituent include halogen atoms and alkoxy groups. Examples of the halogen atoms include fluorine, chlorine, bromine, and iodine atoms. Preferred are fluorine, chlorine, and bromine atom. Examples of the alkoxy groups include methoxy, ethoxy, propoxy, isopropoxy, s-butoxy, t-butoxy, pentyloxy, phenoxy, cyclohexyloxy, and benzyloxy group. The alkoxy group is preferably a C1-C18 alkoxy group, more preferably a C1-C6 alkoxy group, still more preferably a methoxy group.

X in the formula (1) is a hydrophilic functional group. The hydrophilic functional group is not limited. Examples of the hydrophilic functional group include acidic functional groups such as a carboxy group (-COOH), a phosphoric acid group ($-OPO(OH)_2$), a hydroxyl group (-OH), a sulfonic acid group ($-SO_3H$), a phosphonic acid group ($-PO(OH)_2$), a phosphinic acid group (-PO(OH)-), and a mercapto group (-SH) group; and basic functional groups such as amino, ammonium, imino, amide, imide, and maleimide groups.

In the process of forming the porous layer of the diaphragm for alkaline water electrolysis using the composition (P), the compound (A) is considered to interact with the organic polymer at the R (hydrocarbon group) site and interacts with the inorganic particles at the X (hydrophilic functional group) site. These interactions presumably suppress the formation of macrovoids. The reason for this is described later.

To obtain a porous layer having high ionic conductivity, the compound (A) is preferably removed after the formation of the porous layer. From this viewpoint, the hydrophilic functional group is preferably a hydroxyl group or a carboxy group, which has an appropriate interaction force with the inorganic particles, more preferably a hydroxyl group.

From the same viewpoint, the compound (A) is preferably easily volatilized. The compound (A) preferably has a boiling point of 300°C or lower, more preferably 250°C or lower, still more preferably 200°C or lower, at normal pressure.

In summary, the compound (A) is preferably a C6-C10 saturated aliphatic alcohol. Examples include primary alcohols such as cyclohexanol, 1-hexanol, 2-hexanol, 2-methyl-1-pentanol, 1-heptanol, 1-octanol, 2-octanol (1-methylheptanol), 2-ethylhexanol, 1-nonanol, 1-decanol, 1-undecanol, and 1-dodecanol; secondary alcohols such as 2-hexanol and 3-methyl-2-pentanol; and tertiary alcohols such as 2-methyl-2-pentanol. At least one of these may preferably be used.

The compound (A) preferably has a solubility in water at 25°C of 0.001 to 5% by mass. In this way, formation of macrovoids can be easily suppressed. In particular, the solubility is more preferably 0.01 to 3% by mass, still more preferably 0.05 to 2% by mass.

Examples of the solvent include organic solvents capable of dissolving the organic polymer, such as N-methyl-2-pyrrolidone, N-ethyl-2-pyrrolidone, N,N-dimethylacetamide, N,N-dimethylformamide, and dimethylsulfoxide. The composition may contain any one or more of these solvents. To highly dissolve the organic polymer and to highly disperse the inorganic particles, the solvent is preferably N-methyl-2-pyrrolidone. The solvent may contain a non-organic solvent such as water.

The total amount of the organic polymer, inorganic particles, and compound (A) in the composition (P) is preferably 20% by mass or more based on 100% by mass of the composition (P). In particular, the total amount is preferably 30% by mass or more, still more preferably 40% by mass or more. The upper limit of the total amount is preferably, but not limited to, 80% by mass or less, more preferably 60% by mass or less, still more preferably 50% by mass or less. In other words, the total amount of the organic polymer, inorganic particles, and compound (A) in the composition (P) is preferably 20 to 80% by mass, more preferably 30 to 60% by mass, still more preferably 40 to 50% by mass, based on 100% by mass of the composition (P).

The amount of the inorganic particles in the composition (P) is preferably 50 to 90% by mass based on 100% by mass of the total amount of the organic polymer and the inorganic particles. In particular, the upper limit of the amount of the inorganic particles is more preferably 85% by mass, still more preferably 80% by mass. The lower limit thereof is more preferably 55% by mass, still more preferably 60% by mass. The amount of the inorganic particles in the composition (P) is preferably 55 to 85% by mass, still more preferably 60 to 80% by mass, based on 100% by mass of the total amount of the organic polymer and the inorganic particles.

The amount of the compound (A) in the composition (P) is preferably 2 to 30% by mass per 100% by mass of the total amount of the organic polymer and the inorganic particles. In particular, the amount of the compound (A) is more preferably 2.5% by mass or more, still more preferably 3% by mass or more, even more preferably 5% by mass or more. The amount of the compound (A) is more preferably 20% by mass or less, still more preferably 15% by mass or less. The amount of the compound (A) in the composition (P) is more preferably 2.5 to 20% by mass, still more preferably 3 to 15% by mass, even more preferably 5 to 15% by mass, per 100% by mass of the total amount of the organic polymer and the inorganic particles.

The composition (P) may further contain a dispersant. Examples of the dispersant include a cationic surfactant, an anionic surfactant, and a polymeric dispersant. The cationic surfactant preferably has a hydrocarbon chain having five or more carbon atoms. The anionic surfactant preferably has a hydrocarbon chain having five or more carbon atoms. The polymer dispersant preferably has a hydrocarbon chain having five or more carbon atoms as a structural unit (repeating unit) and has a hydrophilic functional group. Examples of the hydrophilic functional group include acidic functional groups such as a carboxy group, a phosphoric acid group, and a sulfonic acid group; and basic functional groups such as an amino group. Particularly preferred are a carboxy group and a phosphoric acid group.

The amount of the dispersant in the composition (P) is preferably more than 0.01% by mass and not more than 8.0% by mass, more preferably 0.1% by mass or more and not more than 6.0% by mass or less, still more preferably 1.0% by mass or more and not more than 5.0% by mass, per 100% by mass of the inorganic particles contained in the composition (P).

The composition (P) may further contain a hydrophilic additive. The hydrophilic additive may be an organic hydrophilic additive or an inorganic hydrophilic additive. Examples of the organic hydrophilic additive include watersoluble polymers such as polyvinylpyrrolidone, polyethylene glycol, polyethylene oxide, polyvinyl alcohol, polyethyleneimine with a molecular weight of less than 100,000, polyacrylic acid, and dextran; surfactants; glycerol; and saccharides. Particularly preferred are polyethyleneimine and polyacrylic acid. Examples of the inorganic hydrophilic additive include metal chlorides such as calcium chloride, magnesium chloride, lithium chloride, sodium chloride, and potassium chloride. Particularly preferred are metal chlorides.

The amount of the hydrophilic additive in the composition (P) is preferably 0.001 to 20% by mass per 100% by mass of the inorganic particles. When the hydrophilic additive is a metal chloride, the amount of the hydrophilic additive is preferably 0.001 to 15% by mass, more preferably 0.01 to 12% by mass, still more preferably 0.05 to 10% by mass, per 100% by mass of the inorganic particles.

The composition (P) may optionally contain a different additive.

The step of obtaining a porous layer using the composition (P) includes the following steps (1) to (3):

(1) a step of preparing the composition (P);
(2) a step of forming a coating film using the composition (P); and
(3) a step of forming the coating film into a porous layer.

The step (1) is preparing the composition (P) by mixing an organic polymer, inorganic particles, the compound (A), and a solvent. The mixing may be performed by any method and any procedure. The mixing may be performed by a known method. An example of the known method is a method using a mixer, a ball mill, a jet mill, a disperser, a sand mill, a roll mill, a pot mill, or a paint shaker. The mixing may be performed by any procedure. For example, the three components of the organic polymer, inorganic particles, and compound (A) may be mixed in a solvent simultaneously or in any order. Alternatively, the organic polymer, inorganic particles, and compound (A) may be mixed in different solvents, and the mixtures may be combined.

The step (2) is forming a coating film on a base material or porous support by applying the composition (P) obtained in the step (1) thereto.

Examples of a method of forming a coating film on a base material include die coating, spin coating, gravure coating, curtain coating, spraying, and using an applicator or a coater.

Examples of the base material include films of resins such as polytetraethylene terephthalate, polyethylene naphthalate, polypropylene, polyethylene, polyvinyl chloride, polyvinyl acetal, polymethyl methacrylate, and polycarbonate, sheets of these resins, and glass plates. Preferred is a polytetraethylene terephthalate film or a polytetraethylene terephthalate sheet.

The step (2) is preferably applying the composition (P) to the porous support. The applying may be performed by any method. Examples of the coating method include a method of directly applying the composition (P) to a porous support, a method of immersing the porous support in the composition (P), a method including applying the composition (P) to the above-mentioned base material to form a coating film, bringing the coating film into contact with a porous support so that the porous support is impregnated with the composition (P).

The coating film may be provided on one or both sides of the porous support. The entire coating film may be laminated on a surface of the porous support, or part of the coating film may be included in the porous support and the remaining part may be laminated on a surface of the porous support. In the case where part of the coating film is included in the porous support, part of the coating film may be included in the porous support in the thickness direction, or the entire coating film may be included in the porous support in the thickness direction. By appropriately adjusting the coating method, the viscosity of the composition (P), and the like, the degree of the coating film included in the porous support can be adjusted.

The porous support may be formed from a resin such as polyethylene, polypropylene, polysulfone, polyether sulfone, polyphenylsulfone, polyphenylene sulfide, polyketone, polyimide, polyetherimide, or fluororesin. The porous support may contain one or more of these. To achieve excellent heat resistance and excellent alkali resistance, the porous support preferably contains at least one selected from polypropylene, polyethylene, and polyphenylene sulfide, more preferably at least one selected from polypropylene and polyphenylene sulfide.

The porous support may have any form. Examples of the form include a nonwoven fabric, a woven fabric, a mesh, a porous membrane, and a mixed fabric of a nonwoven fabric and a woven fabric. A nonwoven fabric, a woven fabric, or a mesh is preferred, a nonwoven fabric or a mesh is more preferred, and a nonwoven fabric is still more preferred.

Preferably, the porous support is a non-woven fabric, woven fabric, or mesh containing at least one resin selected from polypropylene, polyethylene, and polyphenylene sulfide. More preferably, the porous support is a non-woven fabric or mesh containing polyphenylene sulfide.

When the porous support is in the form of a sheet, the thickness of the porous support is not limited. For example, the thickness is 30 to 2000 um. The thickness is preferably 50 to 1000 $\mu$m, more preferably 80 to 500 $\mu$m, still more preferably 80 to 250 $\mu$m.

The thickness of the porous support can be determined by observing the cross section of the porous support with a field emission scanning electron microscope (FE-SEM). For example, the average of the thicknesses at five arbitrary points may be defined as the thickness of the porous support.

The step (3) is forming the coating film obtained in the step (2) into a porous layer. In the present invention, at least non-solvent-induced phase separation is performed.

In the non-solvent-induced phase separation, a liquid containing a non-solvent for the organic polymer contained in the coating film obtained in the step (2) (non-solvent-containing liquid) is used. When the non-solvent-containing liquid is brought into contact with the coating film, the non-solvent diffuses into the coating film. Then, a solvent soluble in the non-solvent is eluted from the coating film. As a result, the organic polymer not soluble in the non-solvent solidifies to form a porous layer.

According to the conventional methods, many macrovoids are formed in a porous layer. According to the production method of the present invention, the formation of macrovoids is suppressed. In other words, the number of macrovoids formed is smaller in the method of the present invention than in the conventional methods. The reason is presumed as follows.

When the coating film is free of the compound (A), the interaction between the organic polymer and the inorganic particles in the coating film is not so strong. Therefore, when a non-solvent-containing liquid is brought into contact with the coating film, a large amount of the non-solvent-containing liquid tends to enter the coating film quickly. The portions occupied by the liquid mixture of the non-solvent-containing liquid and the solvent in the coating film form voids. Thus, a large number of macrovoids are likely to be formed.

In contrast, in the production method of the present invention, the coating film contains the compound (A) having a hydrophobic hydrocarbon group (R) and a hydrophilic functional group (X). It is believed that the hydrocarbon group (R) in the compound (A) interacts with the organic polymer and the hydrophilic functional group (X) in the compound (A) interacts with the inorganic particles. These interactions may extend two-dimensionally or three-dimensionally, like hydrogen bonds in water molecules. When such a coating film is brought into contact with a non-solvent-containing liquid, the hydrophobic components are distributed throughout the coating film. Thus, the diffusion rate of water is kept lower when the compound (A) is contained than when the compound (A) is not contained. This is believed to result in suppression of the formation of macrovoids.

An example of a method of bringing the coating film into contact with the non-solvent-containing liquid is a method of immersing the coating film in the non-solvent-containing liquid (coagulation bath).

The non-solvent has the property of not substantially dissolving the organic polymer. The phrase "not substantially dissolving the organic polymer" refers to the case where the solubility of the organic polymer is 100 mg or less in 100 g of a solvent at 25°C. Examples of the non-solvent include water such as pure water, distilled water, and ion-exchanged water; lower alcohols such as methanol, ethanol, and propyl alcohol; and solvent mixtures thereof. From the viewpoint of wastewater treatment, water is preferred, with ion-exchanged water being more preferred.

The non-solvent-containing liquid only has to contain a non-solvent. The concentration of the non-solvent in the non-solvent-containing liquid may be 100% by mass or close to 100% by mass.

The non-solvent-containing liquid may contain a solvent other than the non-solvent. The solvent other than the non-solvent is not limited. For example, the solvent other than the non-solvent is preferably the same as the solvent contained in the coating film. When the non-solvent-containing liquid contains the solvent other than the non-solvent, the concentration of the non-solvent in the non-solvent-containing liquid is preferably 10% by mass or more, more preferably 20% by mass or more, still more preferably 40% by mass or more. The concentration of the non-solvent is preferably 90% by mass or less, more preferably 80% by mass or less, still more preferably 60% by mass or less. In other words, the concentration of the non-solvent in the non-solvent-containing liquid is preferably 10 to 90% by mass, more preferably 20 to 80% by mass, still more preferably 40 to 60% by mass.

The non-solvent-containing liquid may be brought into contact with the coating film at any temperature. To uniformly solidify the coating film, the temperature is preferably 5°C to 70°C. In particular, the temperature is preferably 10°C to 50°C, still more preferably 15°C to 30°C. The coating film may be immersed in the non-solvent-containing liquid for any duration. The duration is preferably 0.5 to 30 minutes, more preferably 1 to 20 minutes, still more preferably 2 to 15 minutes.

In the step (3), vapor-induced phase separation is preferably performed before the non-solvent-induced phase separation. In the vapor-induced phase separation, the coating film obtained in the step (2) is exposed to vapor containing a non-solvent for the organic polymer (non-solvent-containing gas). The coating film obtained in the step (2) may be exposed to the non-solvent-containing gas by any method. Examples of the method include a method of spraying a non-solvent-containing gas onto the surface of the coating film and a method of exposing the coating film to the gas phase of a storage tank containing a heated non-solvent-containing liquid.

The non-solvent in the vapor-induced phase separation is the same as the non-solvent in the non-solvent-induced phase separation. The non-solvent-containing gas may contain a gas usually contained in air, such as oxygen, nitrogen, or carbon dioxide, and may also contain vapor of the same solvent as the solvent contained in the coating film.

The non-solvent-containing gas only has to contain a non-solvent. As for the concentration of the non-solvent in the non-solvent-containing gas, the proportion of the non-solvent molecules is preferably 50 to 100% by volume, more preferably 70 to 100% by volume, still more preferably 80 to 100% by volume, based on 100% by volume of the non-solvent-containing gas.

The non-solvent-containing gas may have any temperature when it is brought into contact with the coating film. To uniformly solidify the coating film, the temperature is preferably 50°C to 80°C. In particular, the temperature is preferably 55°C to 75°C, still more preferably 60°C to 70°C. The duration for bringing the coating film into contact with the non-solvent-containing gas is preferably 1 to 60 seconds, more preferably 2 to 30 seconds, still more preferably 3 to 15 seconds.

Through the steps (1) to (3), a porous layer containing the organic polymer and the inorganic particles is obtained. This porous layer may be used as a diaphragm for alkaline water electrolysis. The porous layer obtained in the step (3) may however contain the non-solvent contained in the non-solvent-containing liquid and the solvent component contained in the coating film formed in the step (2). These substances can affect the performance of a diaphragm for alkaline water electrolysis. From such a viewpoint, the method of producing a diaphragm for alkaline water electrolysis of the present invention preferably further includes the following step (4).

(4) Step of drying a porous layer

The step (4) is a drying step for removing the non-solvent, the compound (A), and the like contained in the porous layer obtained in the step (3). The drying temperature is preferably 60°C to 150°C, more preferably 60°C to 130°C. The drying duration is preferably 2 to 60 minutes, more preferably 2 to 30 minutes, still more preferably 5 to 30 minutes. The drying may be performed under atmospheric pressure or reduced pressure. To facilitate removal of volatile components, the drying is preferably performed under reduced pressure at 0.03 to 0.06 atm.

The production method of the present invention may further include other known steps such as a step of pressing the diaphragm to allow the diaphragm to have a uniform density, in addition to the steps (1) to (4).

The method described above can produce a diaphragm for alkaline water electrolysis in which the formation of macrovoids is suppressed.

2. Diaphragm for alkaline water electrolysis

The diaphragm for alkaline water electrolysis of the present invention is described. The diaphragm for alkaline water electrolysis can be obtained, for example, by the production method described in "1. Method of producing diaphragm for alkaline water electrolysis" above.

The diaphragm for alkaline water electrolysis includes a porous layer containing an organic polymer and inorganic particles. Preferably, the diaphragm further includes a porous support.

The organic polymer, inorganic particles, and porous support are the same as those described in "1. Method of producing diaphragm for alkaline water electrolysis". For example, the organic polymer is preferably polysulfone. The inorganic particles are preferably particulate magnesium hydroxide. The porous support is preferably a nonwoven fabric or mesh containing polyphenylene sulfide.

The amount of the organic polymer is not limited. The amount of the organic polymer is preferably 10 to 50% by mass based on 100% by mass of the porous layer. When the amount of the organic polymer falls within the range, the ionic conductivity and mechanical strength are excellent. In particular, the amount of the organic polymer is more preferably 15% by mass or more, still more preferably 20% by mass or more. The amount of the organic polymer is more preferably 45% by mass or less, still more preferably 40% by mass or less. In other words, the amount of the organic polymer is more preferably 15 to 45% by mass, still more preferably 20 to 40% by mass, based on 100% by mass of the porous layer.

The amount of the inorganic particles is not limited. The amount of the inorganic particles is preferably 50 to 90% by mass based on 100% by mass of the porous layer. When the amount of the inorganic particles falls within the range, the ionic conductivity is excellent. In particular, the amount of the inorganic particles is more preferably 55% by mass or more, still more preferably 60% by mass or more. The amount of the inorganic particles is more preferably 85% by mass or less, still more preferably 80% by mass or less. In other words, the amount of the inorganic particles is more preferably 55 to 85% by mass, still more preferably 60 to 80% by mass, based on 100% by mass of the porous layer.

The porous layer may contain a compound (A). The compound (A) is the same as that described in "1. Method of producing diaphragm for alkaline water electrolysis". The amount of the compound (A) is not limited. The amount of the compound (A) is preferably 10% by mass or less based on 100% by mass of the porous layer. In particular, the amount of the compound (A) is preferably 5% by mass or less, still more preferably 1% by mass or less.

The porous layer may contain a dispersant. The dispersant is the same as that described in "1. Method of producing diaphragm for alkaline water electrolysis". The amount of the dispersant is not limited. The amount of the dispersant is preferably more than 0.01% by mass and 8.0% by mass or less, more preferably 0.1% by mass or more and 6.0% by mass or less, still more preferably 1.0% by mass or more and 5.0% by mass or less, per 100% by mass of the inorganic particles in the porous layer.

The porous layer may naturally contain impurities. Impurities here refer to components that are not actively mixed in, regardless of whether they are avoidable or unavoidable.

When the diaphragm for alkaline water electrolysis includes a porous support, the amount of the porous layer in the diaphragm for alkaline water electrolysis is not limited. The amount of the porous layer is preferably 10 to 80% by mass based on 100% by mass of the diaphragm for alkaline water electrolysis. In particular, the amount of the porous layer is more preferably 15% by mass or more, still more preferably 20% by mass or more. The amount of the porous layer is more preferably 75% by mass or less, still more preferably 70% by mass or less. In other words, the amount of the porous layer in the diaphragm for alkaline water electrolysis is more preferably 15 to 75% by mass, still more preferably 20 to 70% by mass, based on 100% by mass of the diaphragm for alkaline water electrolysis.

The porous layer may be provided on one or both sides of the porous support. The entire porous layer may be laminated on the surface of the porous support, or part of the porous layer may be included in the porous support and the remaining part may be laminated on the surface of the porous support. In the case where part of the porous layer is included in the porous support, part of the porous layer may be included in the porous support in the thickness direction, or the entire porous layer may be included in the porous support in the thickness direction. For example, two porous layers laminated respectively on the front and back surfaces of the porous support may be included in and integrated with the porous support.

The proportion of macrovoids each having a major axis of 30 um or more and a minor axis of 5 um or more in the porous layer of the diaphragm for alkaline water electrolysis of the present invention is 50% or less. To improve the mechanical strength of the diaphragm for alkaline water electrolysis, the proportion of macrovoids is more preferably 30% or less, still more preferably 20% or less, even more preferably 10% or less. For example, the proportion of macrovoids may be 0% or more and 18% or less, preferably 0% or more and 12% or less.

The proportion of macrovoids refers to the ratio of the total area of macrovoids to the area of the porous layer in the cross section of the porous layer in the thickness direction. When the diaphragm for alkaline water electrolysis includes no porous support, the proportion of macrovoids in the porous layer falls within the above range. When the diaphragm for alkaline water electrolysis includes a porous support, the proportion of macrovoids in a non-impregnation portion of the porous layer which is not included in the porous support falls within the above range. A method of measuring the proportion of macrovoids is described in detail in the Examples.

The diaphragm for alkaline water electrolysis of the present invention is characterized by the structure of the porous layer. A diaphragm for alkaline water electrolysis (S1), a diaphragm for alkaline water electrolysis (S2), and a diaphragm for alkaline water electrolysis (S3) are described below according to the structures of porous layers.

<Diaphragm for alkaline water electrolysis (S1)>

The diaphragm for alkaline water electrolysis (S1) is a diaphragm for alkaline water electrolysis, including a porous layer that contains an organic polymer and inorganic particles. Paired main surfaces of the porous layer define front and back surfaces of the diaphragm for alkaline water electrolysis. When a cross section of the porous layer is trisected in its thickness direction into three cross-sectional layers having the same thickness, two of the cross-sectional layers including the front and back surfaces of the diaphragm for alkaline water electrolysis define a surface layer and a back layer, and the other cross-sectional layer defines an inner layer. The inner layer has a larger average pore size than at least one of the surface layer or the back layer.

The diaphragm for alkaline water electrolysis having such a structure has both excellent ion conductivity and excellent gas barrier properties. The diaphragm for alkaline water electrolysis (S1) is also referred to as a diaphragm (S1).

The diaphragm (S1) is the diaphragm for alkaline water electrolysis of the present invention including no porous support. Since the diaphragm includes no porous support, the paired main surfaces of the porous layer define the front and back surfaces of the diaphragm for alkaline water electrolysis. Here, the front and back sides of the diaphragm for alkaline water electrolysis are not distinguished from each other. For convenience of description, one of the paired main surfaces of the diaphragm for alkaline water electrolysis is referred to as a front surface, and the other is referred to as a back surface.

The cross section of the porous layer is trisected in its thickness direction into three parts having the same thickness to obtain a cross-sectional layer including the front surface of the diaphragm for alkaline water electrolysis (surface layer), a cross-sectional layer including neither the front surface nor the back surface of the diaphragm for alkaline water electrolysis (inner layer), a cross-sectional layer including the back surface of the diaphragm for alkaline water electrolysis (back layer). The average pore size of the inner layer is larger than the average pore size of at least one of the surface layer or the back layer. To improve mechanical strength, the average pore size of the inner layer is preferably larger than the average pore size of each of the surface layer and the back layer.

The ratio of the average pore size of the inner layer to the average pore size of at least one of the surface layer or the back layer (average pore size ratio $r_{11}$) is more than 1.0. In particular, the ratio $r_{11}$ is preferably 1.1 or more, more preferably 1.2 or more. The ratio $r_{11}$ is preferably 3.0 or less, more preferably 2.5 or less, still more preferably 2.0 or less.

The average pore size of the inner layer is not limited. To improve mechanical strength, the average pore size is preferably 0.1 to 5.0 um. In particular, the average pore size is more preferably 0.2 um or more, still more preferably 0.3 um or more. The average pore size is more preferably 4.0 um or less, still more preferably 3.0 um or less. In other words, the average pore size of the inner layer is more preferably 0.2 to 4.0 um, still more preferably 0.3 to 3.0 $\mu$m.

The average pore sizes of the surface layer and the back layer are not limited. To improve mechanical strength, each average pore size is preferably 0.05 to 3.0 um. In particular, the average pore size is more preferably 0.1 um or more, still more preferably 0.2 um or more. The average pore size is more preferably 2.5 um or less, still more preferably 2.0 um or less. Each of the surface layer and the back layer preferably has such an average pore size. In other words, the average pore size of each of the surface layer and the back layer is more preferably 0.1 to 2.5 $\mu$m, still more preferably 0.2 to 2.0 $\mu$m.

<Diaphragm for alkaline water electrolysis (S2)>

The diaphragm for alkaline water electrolysis (S2) is a diaphragm for alkaline water electrolysis, including: a porous layer that contains an organic polymer and inorganic particles; and a porous support. The porous layer includes a non-impregnation layer which is not included in the porous support. When a cross section of the non-impregnation layer is trisected in its thickness direction into three cross-sectional layers having the same thickness, a cross-sectional layer including a surface of the diaphragm for alkaline water electrolysis defines a surface layer and the two cross-sectional layers other than the surface layer define inner layers. At least one of the inner layers has a larger average pore size than the surface layer.

The diaphragm for alkaline water electrolysis having such a structure has both excellent ion conductivity and excellent gas barrier properties. The diaphragm for alkaline water electrolysis (S2) is also referred to as a diaphragm (S2).

The diaphragm (S2) is the diaphragm for alkaline water electrolysis of the present invention including a porous support. Since the diaphragm includes a porous support, one of the paired main surfaces of the porous layer defines a surface of the diaphragm for alkaline water electrolysis.

The cross section of the porous layer is trisected in its thickness direction into three parts having the same thickness to obtain a cross-sectional layer including a surface of the diaphragm for alkaline water electrolysis (surface layer) and two cross-sectional layers including no surface of the diaphragm for alkaline water electrolysis (inner layers). In the diaphragm (S2), at least one of the two inner layers has a larger average pore size than the surface layer. The diaphragm (S2) only has to have a porous layer having this configuration on at least one main surface of the porous support.

The ratio of the average pore size of the inner layer having a larger average pore size to the average pore size of the surface layer (average pore size ratio $r_{11}$) is more than 1.0. In particular, the ratio $r_{11}$ is preferably 1.1 or more, more preferably 1.2 or more. The ratio $r_{11}$ is preferably 3.0 or less, more preferably 2.5 or less, still more preferably 2.0 or less. In other words, the average pore size ratio $r_{11}$ is preferably more than 1.0 and not more than 3.0, more preferably not less than 1.1 and not more than 2.5, still more preferably not less than 1.2 and not more than 2.0.

The average pore size of the inner layer having a larger average pore size is not limited. To increase the balance of the strength, the average pore size is preferably 0.1 to 5.0 um. In particular, the average pore size is more preferably 0.2 um or more, still more preferably 0.3 um or more. The average pore size is more preferably 4.0 um or less, still more preferably 3.0 um or less. In other words, the average pore size of the inner layer having a larger average pore size is more preferably 0.2 to 4.0 um, still more preferably 0.3 to 3.0 um.

The inner layer having a smaller average pore size preferably has such an average pore size.

The average pore size of the surface layer is not limited. To increase the balance of the strength, the average pore size is preferably 0.05 to 3.0 um. In particular, the average pore size is more preferably 0.1 um or more, still more preferably 0.2 um or more. The average pore size is more preferably 2.5 um or less, still more preferably 2.0 um or less. In other words, the average pore size of the surface layer is more preferably 0.1 to 2.5 $\mu$m, still more preferably 0.2 to 2.0 $\mu$m.

The inner layer adjacent to the surface layer preferably has a larger average pore size than the surface layer. Each of the two inner layers preferably has a larger average pore size than the surface layer.

In the diaphragm (S2), part of the porous layer is preferably included in the porous support. In other words, the porous layer preferably includes an impregnation layer which is included in the porous support and a non-impregnation layer which is not included in the porous support. At least one of the two inner layers in the non-impregnation layer preferably has a larger average pore size than the impregnation layer.

The ratio of the average pore size of the inner layer having a larger average pore size in the non-impregnation layer to the average pore size of the impregnation layer (average pore size ratio $r_{12}$) is preferably more than 1.0. The ratio $r_{12}$ is more preferably 1.2 or more, still more preferably 1.4 or more. The ratio $r_{12}$ is preferably 3.0 or less, more preferably 2.5 or less, still more preferably 2.0 or less. In other words, the average pore size ratio $r_{12}$ is preferably more than 1.0 and not more than 3.0, more preferably not less than 1.2 and not more than 2.5, still more preferably not less than 1.4 and not more than 2.0.

The average pore size of the impregnation layer is not limited. To increase the balance of the strength, the average pore size is preferably 0.05 to 3.0 um. In particular, the average pore size is more preferably 0.1 um or more, still more preferably 0.2 um or more. The average pore size is more preferably 2.5 um or less, still more preferably 2.0 um or less. In other words, the average pore size of the impregnation layer is more preferably 0.1 to 2.5 $\mu$m, still more preferably 0.2 to 2.0 $\mu$m.

The thickness of the non-impregnation layer is not limited. To increase the balance of the strength, the thickness is preferably 20 to 150 um. In particular, the thickness is more preferably 30 um or more, still more preferably 40 um or more. The thickness is more preferably 120 um or less, still more preferably 100 um or less. When the non-impregnation layer is present on each side of the porous support, each of the non-impregnation layers has thicknesses described above. In other words, the thickness of the non-impregnation layer is more preferably 30 to 120 $\mu$m, still more preferably 40 to 100 $\mu$m.

The thickness of the impregnation layer is not limited. To achieve excellent strength and low resistance, the thickness is preferably 50 to 300 um. In particular, the thickness is more preferably 80 um or more, still more preferably 130 um or more. The thickness is more preferably 250 um or less. When the impregnation layer is present on each side of the porous support, each of the impregnation layers has thicknesses described above. In other words, the thickness of the non-impregnation layer is more preferably 80 to 250 $\mu$m, still more preferably 130 to 250 $\mu$m.

<Diaphragm for alkaline water electrolysis (S3)>

The diaphragm for alkaline water electrolysis (S3) is a diaphragm for alkaline water electrolysis, including: a porous layer that includes an organic polymer and inorganic particles; and a porous support, the porous layer including an impregnation layer which is included in the porous support and a non-impregnation layer which is not included in the porous support, wherein when a cross-section of the non-impregnation layer is trisected in its thickness direction into three cross-sectional layers having the same thickness, one cross-sectional layer including a surface of the diaphragm for alkaline water electrolysis defines a surface layer and the two cross-sectional layers other than the surface layer define inner layers, and wherein at least one of the inner layers has a larger average pore size than the impregnation layer.

The diaphragm for alkaline water electrolysis having such a structure has both excellent ion conductivity and excellent gas barrier properties. The diaphragm for alkaline water electrolysis (S3) is also referred to as a diaphragm (S3).

The diaphragm (S3) is the diaphragm for alkaline water electrolysis of the present invention including a porous support. Since the diaphragm includes a porous support, one of the paired main surfaces of the porous layer defines a surface of the diaphragm for alkaline water electrolysis.

The cross section of the porous layer is trisected in its thickness direction into three parts having the same thickness to obtain a cross-sectional layer including a surface of the diaphragm for alkaline water electrolysis (surface layer) and two cross-sectional layers including no surface of the diaphragm for alkaline water electrolysis (inner layers). In the diaphragm (S3), at least one of the two inner layers has a larger average pore size than the impregnation layer. The diaphragm (S3) only has to have a porous layer having this configuration on at least one main surface side of the porous support.

The ratio of the average pore size of the inner layer having a larger average pore size of the non-impregnation layer to the average pore size of the impregnation layer (average pore size ratio $r_{22}$) is preferably more than 1.0. In particular, the ratio $r_{22}$ is more preferably 1.2 or more, still more preferably 1.4 or more. The ratio $r_{22}$ is preferably 3.0 or less, more preferably 2.5 or less, still more preferably 2.0 or less. In other words, the average pore size ratio $r_{22}$ is preferably more than 1.0 and not more than 3.0, more preferably not less than 1.2 and not more than 2.5, still more preferably not less than 1.4 and not more than 2.0.

The average pore size of the inner layer having a larger average pore size of the non-impregnation layer is not limited. To increase the balance of the strength, the average pore size is preferably 0.1 to 5.0 um. In particular, the average pore size is more preferably 0.2 um or more, still more preferably 0.3 um or more. The average pore size is more preferably 4.0 um or less, still more preferably 3.0 um or less. In other words, the average pore size of the inner layer having a larger average pore size of the non-impregnation layer is more preferably 0.2 to 4.0 um, still more preferably 0.3 to 3.0 um. The inner layer having a smaller average pore size of the non-impregnation layer preferably has such an average pore size.

The average pore size of the impregnation layer is not limited. To increase the balance of the strength, the average pore size is preferably 0.05 to 3.0 um. In particular, the average pore size is more preferably 0.1 um or more, still more preferably 0.2 um or more. The average pore size is more preferably 2.5 um or less, still more preferably 2.0 um or less. In other words, the average pore size of the impregnation layer is more preferably 0.1 to 2.5 $\mu$m, still more preferably 0.2 to 2.0 um.

The thickness of the non-impregnation layer is not limited. To increase the balance of the strength, the thickness is preferably 20 to 150 um. In particular, the thickness is more preferably 30 um or more, still more preferably 40 um or more. The thickness is more preferably 120 um or less, still more preferably 100 um or less. In other words, the thickness of the non-impregnation layer is more preferably 30 to 120 $\mu$m, still more preferably 40 to 100 um. When the non-impregnation layer is present on each side of the porous support, each of the non-impregnation layers has respective thicknesses described above.

The thickness of the impregnation layer is not limited. To achieve excellent strength and low resistance, the thickness is preferably 50 to 300 $\mu$m. The thickness is more preferably 80 um or more, still more preferably 130 um or more. The thickness is more preferably 250 um or less, still more preferably 200 um or less. In other words, the thickness of the impregnation layer is more preferably 80 to 250 $\mu$m, still more preferably 130 to 200 um. When the impregnation layer is present on each side of the porous support, each of the non-impregnation layers has respective thicknesses.

In the diaphragm (S3), the average pore size of the inner layer having a larger average pore size of the non-impregnation layer is preferably larger than the average pore size of the surface layer.

The ratio of the average pore size of the inner layer having a larger average pore size to the average pore size of the surface layer (average pore size ratio $r_{21}$) is preferably more than 1.0. In particular, the ratio $r_{22}$ is more preferably 1.1 or more, still more preferably 1.2 or more. The ratio $r_{22}$ is preferably 3.0 or less, more preferably 2.5 or less, still more preferably 2.0 or less. In other words, the average pore size ratio $r_{21}$ is preferably more than 1.0 and not more than 3.0, more preferably not less than 1.1 and not more than 2.5, still more preferably not less than 1.2 and not more than 2.0.

The average pore size of the surface layer is not limited. To increase the balance of the strength, the average pore size is preferably 0.05 to 3.0 um. In particular, the average pore size is more preferably 0.1 um or more, still more preferably 0.2 um or more. The average pore size is more preferably 2.5 um or less, still more preferably 2.0 um or less. In other words, the average pore size of the surface layer is more preferably 0.1 to 2.5 $\mu$m, still more preferably 0.2 to 2.0 um. The inner layer having a smaller average pore size preferably has such an average pore size.

The inner layer adjacent to the surface layer preferably has a larger average pore size than the surface layer. Each of the two inner layers has a larger average pore size than the surface layer.

<<Method of determining average pore size of non-impregnation layer>>

An example of the method of determining the average pore size of the non-impregnation layer of each of the diaphragms (S1) to (S3) is described. Here, in the diaphragm (S1), the porous layer is not included in the porous support. Thus, the diaphragm (S1) is regarded as a non-impregnation layer. Hereinafter, when the diaphragms (S1) to (S3) are not distinguished from one another, they are each simply referred to as a diaphragm.

(1) Obtaining observed image

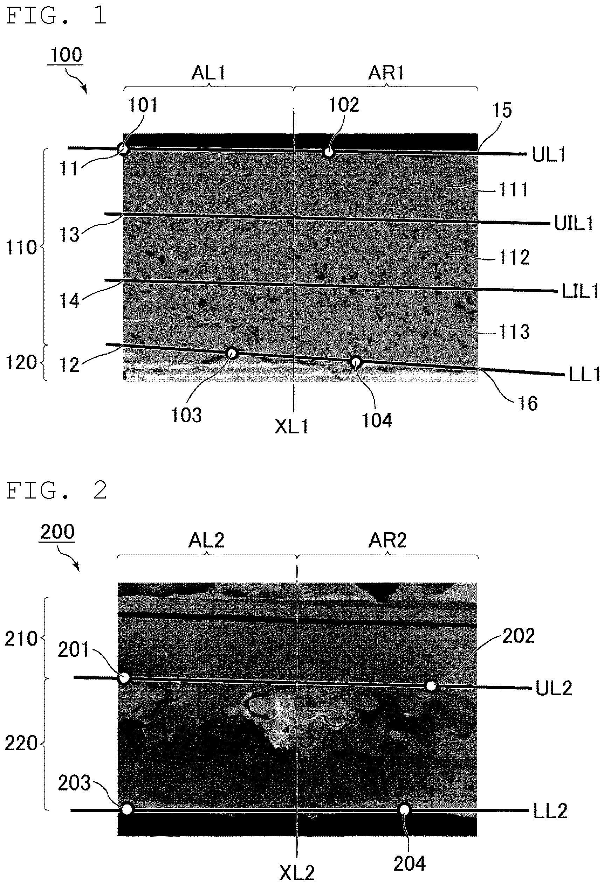

Each of the diaphragms for alkaline water electrolysis is cut in the thickness direction to obtain a cross section. The cross section is observed with a field emission scanning electron microscope (FE-SEM) to obtain an observed image. An example of the observed image is shown in FIG. 1. An observed image 100 in FIG. 1 is a rectangle having a horizontal length L1 and a vertical length L2.

The observed image 100 is taken at a magnification at which the observed image 100 includes the non-impregnation layer 110 entirely in the thickness direction. In the observed image 100, the vertical direction defines the thickness direction of the non-impregnation layer 110, and the horizontal direction defines the plane direction of the non-impregnation layer 110. In the structure of the diaphragm (S1), any of main surfaces of the non-impregnation layer 110 defines the upper side. In the structures of the diaphragms (S2) and (S3), the side opposite to an impregnation layer 120 defines the upper side. In this way, five observed images 100 are obtained.

The horizontal length L1 is not limited. For example, L1 is about 50 to 150 um. The vertical length L2 may be selected depending on the thickness of the non-impregnation layer 110. For example, L2 is about 20 to 150 $\mu$m.

(2) Defining surface layer, inner layer, and back layer in non-impregnation layer

The cross-section of the non-impregnation layer 110 is trisected in its thickness direction into three cross-sectional layers having the same thickness to define a surface layer, an inner layer, and a back layer. The technique of defining the layers is described with reference to FIG. 1. FIG. 1 shows the observed image 100 surrounded by dotted lines. The observed image 100 includes the non-impregnation layer 110. A center line XL1 is drawn parallel to the vertical direction of the observed image 100 through the horizontal center of the observed image 100. The area to the left of the center line XL1 defines a left area AL1, and the area to the right of the center line XL1 defines a right area AR1.

(2-1) Defining upper reference line UL1

In the observed image 100, an upper reference line UL1 is defined as a straight line connecting a highest position 101 on the upper contour line of the non-impregnation layer 110 in the left area AL1 and a highest position 102 on the upper contour line of the non-impregnation layer 110 in the right area AR1. Hereinafter, the upper reference line UL1 is defined as the upper contour line of the non-impregnation layer 110. The highest position refers to a position closest to the upper side of the observed image 100.

(2-2) Defining lower reference line LL1

In the observed image 100, a lower reference line LL1 is defined as a straight line connecting a highest position 103 on the lower contour line of the non-impregnation layer 110 in the left area AL1 and a highest position 104 on the lower contour line of the non-impregnation layer 110 in the right area AR1. Hereinafter, the lower reference line LL1 is defined as the lower contour line of the non-impregnation layer 110. The highest position refers to a furthest position from the lower side of the observed image 100.

(2-3) Defining internal dividing lines

An intersection 11 of the upper reference line UL1 and the left side of the observed image 100 is determined. An intersection 12 of the lower reference line LL1 and the left side of the observed image 100 is determined. An intersection 15 of the upper reference line UL1 and the right side of the observed image 100 is determined. An intersection 16 of the lower reference line LL1 and the right side of the observed image 100 is determined. Next, the shorter distance is selected from the distance between the intersection 11 and the intersection 12 and the distance between the intersection 15 and the intersection 16. When the shorter distance is the distance between the intersection 11 and the intersection 12 as shown in FIG. 1, the distance between the intersection 11 and the intersection 12 is trisected into three parts of the same distance to determine an intersection 13 and an intersection 14 on the left side of the observed image 100 in order from the intersection 11. Then, an upper internal dividing line UIL1 that is parallel to the upper reference line UL1 and passes through the intersection 13 and a lower internal dividing line LIL1 that is parallel to the upper reference line UL1 and passes through the intersection 14 are drawn. When the shorter distance is the distance between the intersection 15 and the intersection 16, the distance between the intersection 15 and the intersection 16 is trisected into three parts of the same distance to determine an intersection 17 and an intersection 18 on the right side of the observed image 100 in order from the intersection 15. Then, an upper internal dividing line UIL1 that is parallel to the upper reference line UL1 and passes through the intersection 17 and a lower internal dividing line LIL1 that is parallel to the upper reference line UL1 and passes through the intersection 18 are drawn.

(2-4) Defining surface layer, inner layer, and back layer

By the technique described above, the non-impregnation layer 110 is divided into an area 111 between the upper reference line UL1 and the upper internal division line UIL1, an area 112 between the upper internal division line UIL1 and the lower internal division line LIL1, and an area 113 between the lower internal division line LIL1 and the lower reference line LL1. In the diaphragm (S1), the area 111 defines the surface layer, the area 112 defines the inner layer, and the area 113 defines the back layer. In the diaphragms (S2) and (S3), the area 111 defines the surface layer, and the areas 112 and 113 define the inner layers.

(3) Measurement of average pore size

The average pore size of each of the layers (surface layer, inner layer, and back layer) in the non-impregnation layer 110 can be determined by image analysis. Commercially available image analysis software is preferably used. Examples include Scion Image (available from Sciion) and Image-Pro Premier (available from Media Cybernetics).
The average pore size of the surface layer is determined as follows. First, a measurement area is selected so as to include 50 or more pores. Next, the pore size of each pore observed within the measurement area is calculated. The pore size is calculated using the image analysis software as an average of the lengths of line segments each passing through two points on the outer periphery of the pore and the center of gravity of the pore. The pores are openings formed due to lack of organic polymers or inorganic particles.
Then, the average of the pore sizes of only pores each having a pore size of 0.1 um or more is calculated. The average is calculated from 50 pores.
This measurement is performed for five different measurement areas. The values determined from the five areas are averaged to determine the average pore size of the surface layer. The average pore sizes of the inner layer and back layer are determined in the same way.

<<Method of determining average pore size of impregnation layer>>

An example of the method of determining the average pore size of the impregnation layer of the diaphragm (S2) or (S3) is described. Hereinafter, when the diaphragms (S2) and (S3) are not distinguished from each other, they are each simply referred to as a diaphragm.

(1) Obtaining cross-sectional observed image

Each of the diaphragms for alkaline water electrolysis is cut in the thickness direction to obtain a cross section. The cross section is observed with a field emission scanning electron microscope (FE-SEM) to obtain an observed image. An example of the observed image is shown in FIG. 2. An observed image 200 in FIG. 2 is a rectangle having a horizontal length L1 and a vertical length L2. The observed image 200 is taken at a magnification at which the observed image 200 includes the entire thickness of an impregnation layer 220. In the observed image 200, the vertical direction defines the thickness direction of the impregnation layer 220, and the horizontal direction defines the plane direction of the impregnation layer 220. A non-impregnation layer 210 side is defined as the upper side. When two non-impregnation layers 210 are connected by one impregnation layer 220, any one of the non-impregnation layers 210 is defined as the upper side. In this way, five observed images 200 are obtained.
The horizontal length L1 is not limited. For example, L1 is about 50 to 150 um. The vertical length L2 may be selected depending on the thickness of the non-impregnation layer. For example, L2 is about 20 to 150 $\mu$m.

(2) Defining impregnation layer

The technique of defining the impregnation layer is described with reference to FIG. 2. FIG. 2 shows the observed image 200 surrounded by dotted lines. The observed image 200 includes the non-impregnation layer 210 and the impregnation layer 220. A center line XL2 is drawn parallel to the vertical direction of the observed image 200 through the horizontal center of the observed image 200. The area to the left of the center line XL2 defines a left area AL2, and the area to the right of the center line XL2 defines a right area AR2.

(2-1) Defining upper reference line UL2

In the observed image 200, an upper reference line UL2 is defined as a straight line connecting a highest position 201 on the upper contour line of the impregnation layer 220 in the left area AL2 and a highest position 202 on the upper contour line of the impregnation layer 220 in the right area AR2. Hereinafter, the upper reference line UL2 is defined as the upper contour line of the impregnation layer 220. The highest position refers to a closest position from the upper side of the observed image 200.

(2-2) Defining lower reference line LL2

In the observed image 200, a lower reference line LL2 is defined as a straight line connecting a highest position 203 on the lower contour line of the impregnation layer 220 in the left area AL2 and a highest position 204 on the lower contour line of the impregnation layer 220 in the right area AR2. Hereinafter, the lower reference line LL2 is defined as the lower contour line of the impregnation layer 220. The highest position refers to a furthest position from the lower side of the observed image 200.

(3) Measurement of average pore size

The average pore size of the impregnation layer 220 can be determined by image analysis. Commercially available image analysis software is preferably used. Examples include Scion Image (available from Sciion) and Image-Pro Premier (available from Media Cybernetics).

The average pore size of the impregnation layer is determined as follows. First, a measurement area is selected so as to include 50 or more pores. Next, the pore size of each pore observed within the measurement area is calculated. The pore size is calculated using the image analysis software as an average of the lengths of line segments each passing through two points on the outer periphery of the pore and the center of gravity of the pore. The pores are openings formed due to lack of organic polymers or inorganic particles.

Then, the average of the pore sizes of only pores each having a pore size of 0.1 um or more is calculated. The average is calculated from 50 pores.

This measurement is performed for five different measurement areas. The values determined from the five areas are averaged to determine the average pore size of the impregnation layer.

<Preferred embodiments of diaphragms (S1) to (S3)>

Preferred embodiments of the diaphragms (S1) to (S3) are described. Hereinafter, when the diaphragms (S1) to (S3) are not distinguished from one another, they are each simply referred to as a diaphragm.

In the diaphragm (S1), the proportion of macrovoids each having a major axis of 30 um or more and a minor axis of 5 um or more in the inner layer is preferably 50% or less. Also, the proportion of the macrovoids in each of the surface layer and the back layer is more preferably 50% or less. In the diaphragms (S2) and (S3), the proportion of macrovoids each having a major axis of 30 um or more and a minor axis of 5 um or more in at least one of the two inner layers in the non-impregnation layer is preferably 50% or less. Also, the proportion of the macrovoids in the surface layer is more preferably 50% or less.

Each diaphragm preferably has a mass reduction rate of 2% or less determined by the ultrasonic test. The diaphragm having a mass reduction rate within the range has excellent mechanical strength because the constituents of the diaphragm are prevented from falling off. The mass reduction rate is more preferably 1.5% or less, still more preferably 1.2% or less, even more preferably 1% or less. The technique of measuring the mass reduction rate is described in detail in Examples.

Each diaphragm preferably has a membrane resistance of 0.30 $\Omega$cm$^2$ or less. The diaphragm having a membrane resistance within the range has excellent electrolysis efficiency because the diaphragm has good ion conductivity in alkaline water electrolysis. The technique of measuring the membrane resistance is described in detail in Examples.

In a hot alkali resistance test, each diaphragm preferably has a ratio of membrane resistance after 240 hours to membrane resistance after 24 hours (membrane resistance ratio) of 0.7 or more. The diaphragm having a membrane resistance ratio within the range has excellent alkali resistance because the diaphragm is less affected by hot alkali. The technique of measuring the membrane resistance ratio is described in detail in Examples.

Each diaphragm preferably has an air permeability of 50 to 5000 seconds. The diaphragm having an air permeability within the range is less likely to allow gas to pass through and has excellent gas barrier properties. The air permeability is more preferably 100 to 1000 seconds, still more preferably 150 to 800 seconds. The technique of measuring the air permeability is described in detail in Examples.

Each diaphragm preferably has a thickness of 50 to 2000 um. The diaphragm having a thickness within the range tends to have a good balance between mechanical strength, gas barrier properties, and ion conductivity. The thickness is more preferably 100 to 1000 $\mu$m, still more preferably 100 to 500 $\mu$m, most preferably 150 to 350 um. The technique of measuring the thickness of each diaphragm is described in detail in Examples.

Each diaphragm preferably has an air permeability per unit thickness of 0.6 or more, which is a value obtained by dividing the air permeability of the diaphragm by the thickness of the diaphragm. The diaphragm having an air permeability per unit thickness within the range is less likely to allow gas to pass through and has excellent gas barrier properties. The air permeability per unit thickness is more preferably 0.65 or more, still more preferably 0.70 or more, even more preferably 0.75 or more. The upper limit of the air permeability per unit thickness is not limited, and is preferably 4.00 or less, more preferably 3.50 or less. In other words, the air permeability per unit thickness is preferably 0.6 or more and 4.00 or less, more preferably 0.65 or more and 3.50 or less, still more preferably 0.70 or more and 3.50 or less, even still more preferably 0.75 or more and 3.50 or less.

3. Intended use

The diaphragm for alkaline water electrolysis of the present invention is suitable in alkaline water electrolysis. The following describes an alkaline water electrolysis apparatus equipped with the diaphragm for alkaline water electrolysis of the present invention and an alkaline water electrolytic method using the diaphragm for alkaline water electrolysis of the present invention.

(Alkaline water electrolysis apparatus)

The alkaline water electrolysis apparatus includes an anode, a cathode, and a diaphragm for alkaline water electrolysis. Specifically, the alkaline water electrolysis apparatus includes an electrolytic cell in which an anode compartment containing an anode and a cathode compartment containing a cathode is separated by a diaphragm for alkaline water electrolysis.

The diaphragm for alkaline water electrolysis is preferably installed near the anode or the cathode, more preferably installed so as to be in contact with the anode and the cathode (so-called zero gap structure). As the distance between the electrodes decreases, the electrical resistance decreases and the efficiency of electrolysis increases.

The anode and cathode are not limited. Each may be one including a conductive substrate and a catalyst layer provided thereon. The conductive substrate may be made of copper, lead, nickel, chromium, titanium, gold, platinum, iron, a metal compound or metal oxide of any of these metals, or an alloy of any two of these metals. The catalyst layer may be made of a metal compound, metal oxide, or alloy containing metal such as nickel, cobalt, palladium, iridium, or platinum. The catalyst layer may be omitted. The shape of each electrode may be any known shape such as a sheet, rod, or prismatic shape. To increase the contact area with the diaphragm so as to increase the efficiency of electrolysis, the shape is preferably a sheet shape.

The electrolysis apparatus may also include a different component commonly used in an electrolysis apparatus. Examples include a gas-liquid separation tank for separating generated gas and electrolyte, a capacitor for stably performing electrolysis, and a mist separator.

(Alkaline water electrolysis method)

The alkaline water electrolysis method is performed by filling the above-mentioned alkaline water electrolysis apparatus with an electrolyte (an alkaline aqueous solution in which potassium hydroxide, sodium hydroxide, or the like is dissolved) and applying a current to the electrolyte. The concentration of alkali metal hydroxide in the electrolyte is preferably 20 to 40% by mass. The temperature during electrolysis is preferably 50°C to 120°C, more preferably 80°C to 90°C. The current density during electrolysis is usually 0.2 $A/cm^2$ or more, preferably 0.3 $A/cm^2$ or more. When the current density is high, a large amount of hydrogen gas and oxygen gas can be obtained in a short time. The voltage during electrolysis is, for example, 1.5 to 2.5 V. The voltage is adjusted to fall within this range so that the current density becomes high. During the electrolysis, any pressure may be applied. The electrolysis may be performed under atmospheric pressure or increased pressure. Since the diaphragm for alkaline water electrolysis of the present invention has excellent gas barrier properties, it can be used even under high pressures of 1 MPa or higher (e.g., 3 MPa).

EXAMPLES

The method of producing a diaphragm for alkaline water electrolysis of the present invention and the diaphragm for alkaline water electrolysis of the present invention are described with reference to Examples below. The present invention is not limited to these examples.

<Measurement of macrovoid content>

The produced diaphragm for alkaline water electrolysis was cut at or near the center in the thickness direction. An obtained cross section was observed with an FE-SEM (Hitachi High-Technologies Corporation, model number: S-4800) to obtain an observed image. The magnification was 300 times. The measurement area in the observed image is an area in a range from the outermost surface of the non-impregnation layer of the diaphragm for alkaline water electrolysis to 60 um in the depth direction and a range of about 400 um in the direction perpendicular to the depth direction. Void images in the measurement area were extracted using image analysis software (Scion Image, available from Scion). For each void image, a vertical length (Lt) parallel to the thickness direction of the diaphragm for alkaline water electrolysis and a horizontal length (Lf) perpendicular to the thickness direction were determined. The thickness direction is a facing direction in which the paired main surfaces of the diaphragm for alkaline water electrolysis face each other. The vertical length (Lt) was defined as the distance parallel to the facing direction between two most distant points on the contour of each void image. Similarly, the horizontal length (Lf) was defined as the distance perpendicular to the facing direction between two most distant points on the contour of each void image. Of the lengths (Lt) and (Lf) thus obtained, the longer one was defined as a major axis (Lb) of the void, and the shorter one was defined as a minor axis (Ls) of the void. In such a way, the major axis (Lb) and minor axis (Ls) of each of the extracted void images were determined. Areas (S) of the void images each having a major axis (Lb) of 30 um or more and a minor diameter (Ls) of 5 um or more were each determined and added up to obtain a total area (Sy) of macrovoids. An area (St) of the measurement area was determined, and the ratio of (Sy) to (St) (Sy/St × 100 (%)) was determined. The same operation was performed in five arbitrary visual fields which were spaced apart at approximately equal intervals, and the average for the five was calculated to determine the macrovoid content of macrovoids each having a major axis of 30 um or more and a minor axis of 5 um or more.

<Measurement of mass reduction rate in ultrasonic test>

A 5 cm × 5 cm specimen was cut from the produced diaphragm for alkaline water electrolysis. The specimen and 6 cc of ion-exchanged water were placed in a zippered plastic bag (Unipack C-4, available from SEISAN NIPPONSHA, Ltd.) and sealed. The zippered plastic bag was allowed to stand in a water tank adjusted to 30°C of an ultrasonic cleaning machine (SND Co., Ltd., model name: US-103) for one hour. Thereafter, the zippered plastic bag was irradiated with ultrasonic waves (high frequency output: 100 W, oscillation frequency: 38 kHz) for three minutes. The weight of the specimen was measured before and after the ultrasonic test using a precision balance (A&D Company, Limited, model number: GH-200), and the mass reduction rate was calculated using the following equation.

Mass reduction rate (%) = 100 - (mass after ultrasonic test (g) / Mass before ultrasonic test (g) × 100).

<Measurement of membrane resistance>

(Measuring method)

The membrane resistance of the produced diaphragm for alkaline water electrolysis was measured as follows. Specifically, two diaphragm samples for measurement are cut from one produced diaphragm. A cell having the following configuration is prepared using any one of the diaphragm samples and allowed to stand in a constant temperature bath at 25°C for 30 minutes. The cell is subjected to AC impedance measurement under the following measurement conditions. The intercept component (Ra) of the real part of the AC impedance when the diaphragm sample is set in a cell and the intercept component (Rb) of the real part of the AC impedance when no diaphragm sample is set in a cell are used to determine a membrane resistance using the equation below. This measurement is performed on the two diaphragm samples, and the obtained measured values (two points) are averaged to obtain a membrane resistance of the diaphragm.

$$\text{(Membrane resistance } (\Omega cm^2)) = (Ra - Rb) \times 1.77$$

(Measurement conditions)

- Configuration of cell

Working electrode: Ni plate
Counter electrode: Ni plate
Electrolyte: 30% by mass aqueous potassium hydroxide solution
Pretreatment of sample: Immersed in the above electrolyte solution overnight
Measurement effective area: 1.77 cm$^2$

- AC impedance measurement conditions

Applied voltage: 10 mV vs. open circuit voltage

Frequency range: 100 kHz to 100 Hz

<Measurement of membrane resistance ratio in hot alkali resistance test>

A 3 cm × 3 cm square specimen was cut from the produced diaphragm for alkaline water electrolysis. Two specimens were prepared. The two specimens were placed in a fluororesin vessel (made of PFA), immersed in 30 g of a 30% KOH aqueous solution, and maintained at 90°C. One of the specimens was taken out after 24 hours from the start of maintaining at 90°C and the other was taken out after 240 hours from the start of maintaining at 90°C. The membrane resistances of the specimens were measured at room temperature and the ratio of (membrane resistance after 240 hour/membrane resistance after 24 hours) was determined as a membrane resistance ratio after the hot alkali resistance test.

<Measurement of thickness>

The thickness of the produced diaphragm for alkaline water electrolysis was measured using a digimatic micrometer (Mitutoyo Corporation). The thickness was measured at 10 arbitrary points which were spaced apart at approximately equal intervals, and the resulting values were averaged.

<Measurement of air permeability>

The air permeability of the produced diaphragm for alkaline water electrolysis was measured using an Oken type air-permeability tester (Asahi Seiko Co., Ltd., model number: EGBO). The air permeability was measured at three arbitrary points which were spaced apart at approximately equal intervals, and the resulting values were averaged.

<Air permeability per unit thickness>

The air permeability Z per unit thickness of the produced diaphragm for alkaline water electrolysis was calculated from the following equation using the air permeability and thickness determined by the above methods.

Z = Air permeability of diaphragm (second) / Thickness of diaphram ($\mu$m)

<Measurement of average pore size>

The average pore size of the produced diaphragm for alkaline water electrolysis was measured according to the method described in <<Method of determining average pore size of non-impregnation layer>> and <<Method of determining average pore size of impregnation layer>>. The image analysis software used was Image-Pro Premier (Media Cybernetics).

(Example 1)

(1. Preparation of inorganic particle dispersion)

Magnesium hydroxide (average particle size 0.20 um, plate shape, aspect ratio 6.21) and N-methyl-2-pyrrolidone (FUJIFILM Wako Pure Chemical Corporation) were mixed at a mass ratio of 1:1. This mixture was put in a pot mill containing zirconia media balls and subjected to dispersion treatment at room temperature for six hours to obtain a magnesium hydroxide dispersion.

(2. Preparation of composition)

First, 100 parts by mass of the obtained magnesium hydroxide dispersion, 57 parts by mass of a polysulfone resin solution obtained by hot dissolving polysulfone resin (BASF, product number: Ultrason S3010) (PSU) in N-methyl-2-pyrrolidone (Mitsubishi Chemical Corporation) at 80°C at a concentration of 35% by mass, and 31 parts by mass of N-methyl-2-pyrrolidone (Mitsubishi Chemical Corporation) were mixed. To the mixture was added 2-ethyl-1-hexanol in an amount of 20 parts by mass per 100 parts by mass of the total amount of the magnesium hydroxide and the polysulfone to prepare a mixture. The resulting mixture was mixed at 1000 rpm at room temperature for about 30 minutes using a planetary centrifugal mixer (Thinky Corporation, product number: THINKYMIXER (Awatori Rentaro) ARE-500) to prepare a composition.

(3. Formation of diaphragm for alkaline water electrolysis)

A polyphenylene sulfide nonwoven fabric (film thickness 130 um, basis weight 60 g/m$^2$) was coated and impregnated with the composition (22 mg/cm$^2$). Thereafter, the nonwoven fabric impregnated with the composition was bathed in a water tank filled with ion-exchanged water for five minutes at room temperature. The obtained membrane was dried at 120°C for 10 minutes to obtain a diaphragm for alkaline water electrolysis (1).
Diaphragms for alkaline water electrolysis (2) to (13) of Examples 2 to 13 and a diaphragm for alkaline water electrolysis (C1) of Comparative Example 1 were prepared as in Example 1 except that part of the procedure was changed. Hereinafter, only the changes are described.

(Example 2)

In (1. Preparation of inorganic particle dispersion), zirconium oxide (Daiichi Kigenso Kagaku Kogyo Co., Ltd., product number UEP) was used instead of magnesium hydroxide.

(Example 3)

In (1. Preparation of inorganic particle dispersion), titanium oxide (average particle size 0.5 um) was used instead of magnesium hydroxide.

(Example 4)

In (2. Preparation of composition), lithium chloride (FUJIFILM Wako Pure Chemical Corporation) was further added. The amount of lithium chloride added was 0.7 parts by mass per 100 parts by mass of magnesium hydroxide.

(Example 5)

In (2. Preparation of composition), lithium chloride (FUJIFILM Wako Pure Chemical Corporation) and polyvinylpyrrolidone (Nippon Shokubai Co., Ltd., K30) were further added. The amount of lithium chloride added was 0.7 parts by mass per 100 parts by mass of magnesium hydroxide. The amount of polyvinylpyrrolidone added was 14 parts by mass per 100 parts by mass of magnesium hydroxide.

(Example 6)

In (2. Preparation of composition), lithium chloride (FUJIFILM Wako Pure Chemical Corporation) and polyvinylpyrrolidone (Kishida Chemical Co., Ltd., K15) were further added. The amount of lithium chloride added was 0.7 parts by mass per 100 parts by mass of magnesium hydroxide. The amount of polyvinylpyrrolidone added was 14 parts by mass per 100 parts by mass of magnesium hydroxide.

(Example 7)

In (2. Preparation of composition), 1-dodecanol was used instead of 2-ethyl-1-hexanol. The amount of 1-dodecanol added was 3 parts by mass per 100 parts by mass of the total amount of magnesium hydroxide and polysulfone.

(Example 8)

In (2. Preparation of composition), the amount of 2-ethyl-1-hexanol added was changed. The amount of 2-ethyl-1-hexanol added was 42 parts by mass per 100 parts by mass of the total amount of magnesium hydroxide and polysulfone.

(Example 9)

In (2. Preparation of composition), lithium chloride (FUJIFILM Wako Pure Chemical Corporation) and polyvinylpyrrolidone (Nippon Shokubai Co., Ltd., K30) were further added. The amount of lithium chloride added was 0.7 parts by mass per 100 parts by mass of magnesium hydroxide. The amount of polyvinylpyrrolidone added was 14 parts by mass per 100 parts by mass of magnesium hydroxide. In (3. Formation of diaphragm for alkaline water electrolysis), a PET film was used instead of the polyphenylene sulfide nonwoven fabric. After forming a diaphragm for alkaline water electrolysis on the PET film, the diaphragm was detached from the PET film to obtain a diaphragm for alkaline water electrolysis (9).

(Example 10)

In (2. Preparation of composition), lithium chloride (FUJIFILM Wako Pure Chemical Corporation) and polyvinylpyrrolidone (Nippon Shokubai Co., Ltd., K30) were further added. The amount of lithium chloride added was 0.7 parts by mass per 100 parts by mass of magnesium hydroxide. The amount of polyvinylpyrrolidone added was 14 parts by mass per 100 parts by mass of magnesium hydroxide.

In (3. Formation of diaphragm for alkaline water electrolysis), the coating method was changed as follows. The composition was poured in a stainless-steel tray, and then a polyphenylene sulfide nonwoven fabric (film thickness 130 um, basis weight 60 $g/m^2$) was immersed therein. Thereafter, the polyphenylene sulfide nonwoven fabric was taken out from the stainless-steel tray. Thereby, both sides of the nonwoven fabric were coated with the composition.

(Example 11)

In (1. Preparation of inorganic particle dispersion), the mixing ratio of magnesium hydroxide (average particle size 0.20 um, plate shape, aspect ratio 6.21) to N-methyl-2-pyrrolidone (FUJIFILM Wako Pure Chemical Corporation) was changed to a mass ratio of 3:2. Furthermore, 3 parts by mass of a polyphosphate dispersant was added per 100 parts by mass of magnesium hydroxide.

In (2. Preparation of composition), lithium chloride (FUJIFILM Wako Pure Chemical Corporation) and polyvinylpyrrolidone (Nippon Shokubai Co., Ltd., K30) were further added. The amount of lithium chloride added was 0.7 parts by mass per 100 parts by mass of magnesium hydroxide. The amount of polyvinylpyrrolidone added was 14 parts by mass per 100 parts by mass of magnesium hydroxide.

(Example 12)

In (1. Preparation of inorganic particle dispersion), the mixing ratio of magnesium hydroxide (average particle size 0.20 um, plate shape, aspect ratio 6.21) to N-methyl-2-pyrrolidone (FUJIFILM Wako Pure Chemical Corporation) was changed to a mass ratio of 3:2. Furthermore, 2 parts by mass of polyester phosphate was added as a dispersant per 100 parts by mass of magnesium hydroxide.

In (2. Preparation of composition), 100 parts by mass of a magnesium hydroxide dispersion, 80 parts by mass of a solution prepared by dissolving polysulfone resin (BASF, product number Ultrason S3010) in N-methyl-2-pyrrolidone at a concentration of 30% by mass, 7.5 parts by mass of 2-ethyl-1-hexanol, 4.3 parts by mass of polyethyleneimine (Nippon Shokubai Co., Ltd., Epomin SP-200), and 18.2 parts by mass of N-methyl-2-pyrrolidone were mixed.

(Example 13)

In (1. Preparation of inorganic particle dispersion), the mixing ratio of magnesium hydroxide (average particle size 0.20 um, plate shape, aspect ratio 6.21) to N-methyl-2-pyrrolidone (FUJIFILM Wako Pure Chemical Corporation) was changed to a mass ratio of 3:2. Furthermore, 2 parts by mass of polyester phosphate was added as a dispersant per 100 parts by mass of magnesium hydroxide.

In (2. Preparation of composition), 100 parts by mass of a magnesium hydroxide dispersion, 80 parts by mass of a solution prepared by dissolving polysulfone resin (BASF, product number Ultrason S3010) in N-methyl-2-pyrrolidone at a concentration of 30% by mass, 12.5 parts by mass of 2-ethyl-1-hexanol, 1.3 parts by mass of polyacrylic acid (FUJIFILM Wako Pure Chemical Corporation, molecular weight 250,000), and 16.2 parts by mass of N-methyl-2-pyrrolidone were mixed.

(Comparative Example 1)

In (2. Preparation of composition), 2-ethyl-1-hexanol was not added.

The diaphragms for alkaline water electrolysis (1) to (13) of Examples 1 to 13 and the diaphragm for alkaline water electrolysis (C1) of Comparative Example 1 were subjected to measurements of macrovoid content, mass reduction rate in the ultrasonic test, membrane resistance, membrane resistance ratio in the hot alkali resistance test, thickness of diaphragm, air permeability per unit thickness, average pore size of a surface layer, average pore size of an inner layer, average pore size of a back layer, and average pore size of an impregnation layer. Table 1 shows the results. The inner layers 1 in Table 1 refer to an inner layer closer to the surface layer. The inner layers 2 in Table 1 refer to an inner layer further from the surface layer. The diaphragm of Example 9 does not include a porous support and thus does not include an inner layer 2 but includes a back layer. The diaphragm of Example 10 includes porous layers provided on both sides of the porous support, where one of the two porous layers defines a porous layer 1 and the other defines a porous layer 2.

[Table 1]

| | Macrovoid content (%) | Mass reduction rate (%) in ultrasonic test | Membrane resistance (Ωcm²) | Membrane resistance ratio between before and after hot alkali resistance test | Thickness of diaphragm (μm) | Air permeability per unit thickness (sec/μm) | Porous layer 1 | | | | | Porous layer 2 | | | | |
|---|---|---|---|---|---|---|---|---|---|---|---|---|---|---|---|---|
| | | | | | | | Average pore size of surface layer (μm) | Average pore size of inner layer 1 (μm) | Average pore size of inner layer 2 (μm) | Average pore size of back layer (μm) | Average pore size of impregnation layer (μm) | Average pore size of surface layer (μm) | Average pore size of inner layer 1 (μm) | Average pore size of inner layer 2 (μm) | Average pore size of back layer (μm) | Average pore size of impregnation layer (μm) |
| Example 1 | 0 | 1.1 | 0.15 | 0.91 | 170 | 2.4 | 0.74 | 0.85 | - | - | 0.80 | - | - | - | - | - |
| Example 2 | 0 | 1.2 | 0.17 | 0.88 | 195 | 1.8 | 0.80 | 0.88 | - | - | 0.77 | - | - | - | - | - |
| Example 3 | 0 | 0.9 | 0.18 | 0.85 | 200 | 2.0 | 0.91 | 1.13 | - | - | 0.96 | - | - | - | - | - |
| Example 4 | 0 | 1.3 | 0.13 | 0.91 | 205 | 1.6 | 0.75 | 0.89 | - | - | 0.88 | - | - | - | - | - |
| Example 5 | 0 | 1.3 | 0.10 | 0.84 | 200 | 0.6 | 0.90 | 1.20 | - | - | 1.02 | - | - | - | - | - |
| Example 6 | 0 | 1.2 | 0.11 | 0.88 | 185 | 0.8 | 0.81 | 1.09 | - | - | 0.75 | - | - | - | - | - |
| Example 7 | 12 | 1.5 | 0.15 | 0.78 | 195 | 1.1 | 0.65 | 0.76 | - | - | 0.70 | - | - | - | - | - |
| Example 8 | 0 | 1.0 | 0.17 | 0.93 | 160 | 2.8 | 0.99 | 1.31 | - | - | 0.96 | - | - | - | - | - |
| Example 9 | 0 | 1.1 | 0.07 | 0.80 | 120 | 0.8 | 0.85 | 1.40 | - | 0.9 | - | - | - | - | - | - |
| Example 10 | 0 | 0.9 | 0.15 | 0.91 | 220 | 2.4 | 0.73 | 0.85 | - | - | 0.71 | 0.75 | 0.81 | - | - | 0.71 |
| Example 11 | 0 | 1.2 | 0.11 | 0.89 | 185 | 0.8 | 0.69 | 0.90 | - | - | 0.75 | - | - | - | - | - |
| Example 12 | 18 | 0.8 | 0.14 | 0.90 | 182 | 0.9 | 0.75 | 0.85 | - | - | 0.78 | - | - | - | - | - |
| Example 13 | 0 | 1.5 | 0.13 | 0.85 | 190 | 1.0 | 0.95 | 1.75 | - | - | 1.51 | - | - | - | - | - |
| Comparative Example 1 | 51 | 2.5 | 0.20 | 0.57 | 260 | 0.5 | 1.30 | 1.15 | 1.10 | - | 1.25 | - | - | - | - | - |

EP 4 407 072 A1

23

The generation of macrovoids was significantly suppressed in the diaphragms for alkaline water electrolysis (1) to (13) of Examples 1 to 13 compared to the diaphragm for alkaline water electrolysis of Comparative Example 1. This is presumably because the composition in Example 1 contains 2-ethyl-1-hexanol and the like in the production of the diaphragm for alkaline water electrolysis.

In the diaphragms for alkaline water electrolysis (1) to (8) and (10) to (13) of Examples 1 to 8 and 10 to 13, the non-impregnation layer includes an inner layer having a larger average pore size than the surface layer. The diaphragm for alkaline water electrolysis (9) of Example 9 includes an inner layer having a larger average pore size than the two surface layers. On the other hand, in the diaphragm for alkaline water electrolysis (C1) of Comparative Example 1, the non-impregnation layer does not include an inner layer having a larger average pore size than the surface layer.

The diaphragms for alkaline water electrolysis (1) to (13) of Examples 1 to 13 have higher air permeability per unit thickness than the diaphragm for alkaline water electrolysis (C1) of Comparative Example 1, and thus have excellent gas barrier properties. Also, the membrane resistances are compared to show that the diaphragms for alkaline water electrolysis (1) to (13) have excellent ionic conductivity. The membrane resistance ratios in the hot alkali resistance test are compared to show that the diaphragms for alkaline water electrolysis (1) to (13) have excellent alkali resistance. The mass reduction rates in the ultrasonic test are compared to show that the diaphragms for alkaline water electrolysis (1) to (13) have excellent mechanical strength.

REFERENCE SIGNS LIST

    100, 200 observed image
    110, 210 non-impregnation layer
    111, 112, 113 area
    120, 220 impregnation layer

**Claims**

1. A method of producing a diaphragm for alkaline water electrolysis that comprises a porous layer, the method comprising
   a step of obtaining the porous layer using a composition that comprises an organic polymer, inorganic particles, a solvent, and a compound represented by the following formula (1):

$$R\text{-}X \qquad (1)$$

   wherein R represents a hydrocarbon group having six or more carbon atoms and X represents a hydrophilic functional group.

2. The method of producing a diaphragm for alkaline water electrolysis according to claim 1,
   wherein an amount of the compound represented by the formula (1) in the composition is 2 to 30% by mass per 100% by mass of a total amount of the organic polymer and the inorganic particles.

3. A diaphragm for alkaline water electrolysis, comprising

   a porous layer that comprises an organic polymer and inorganic particles,
   wherein paired main surfaces of the porous layer define front and back surfaces of the diaphragm for alkaline water electrolysis,
   wherein when a cross section of the porous layer is trisected in its thickness direction into three cross-sectional layers having the same thickness, two of the cross-sectional layers including the front and back surfaces of the diaphragm for alkaline water electrolysis define a surface layer and a back layer, and the other cross-sectional layer defines an inner layer, and
   wherein the inner layer has a larger average pore size than at least one of the surface layer or the back layer.

4. A diaphragm for alkaline water electrolysis, comprising:

   a porous layer that comprises an organic polymer and inorganic particles; and
   a porous support,

the porous layer including a non-impregnation layer which is not included in the porous support, wherein when a cross section of the non-impregnation layer is trisected in its thickness direction into three cross-sectional layers having the same thickness, a cross-sectional layer including a surface of the diaphragm for alkaline water electrolysis defines a surface layer and the two cross-sectional layers other than the surface layer define inner layers, and

wherein at least one of the inner layers has a larger average pore size than the surface layer.

5. A diaphragm for alkaline water electrolysis, comprising:

a porous layer that comprises an organic polymer and inorganic particles; and
a porous support,
the porous layer including an impregnation layer which is included in the porous support and a non-impregnation layer which is not included in the porous support,
wherein when a cross-section of the non-impregnation layer is trisected in its thickness direction into three cross-sectional layers having the same thickness, one cross-sectional layer including a surface of the diaphragm for alkaline water electrolysis defines a surface layer and the two cross-sectional layers other than the surface layer define inner layers, and
wherein at least one of the inner layers has a larger average pore size than the impregnation layer.

6. The diaphragm for alkaline water electrolysis according to claim 5,
wherein at least one of the inner layers has a larger average pore size than the surface layer.

FIG. 1

FIG. 2

| INTERNATIONAL SEARCH REPORT | International application No. |
|---|---|
| | **PCT/JP2022/034076** |

**A. CLASSIFICATION OF SUBJECT MATTER**

*C25B 13/08*(2006.01)i; *C02F 1/461*(2006.01)i; *C25B 1/04*(2021.01)i; *C25B 9/00*(2021.01)i; *C25B 13/02*(2006.01)i; *C25B 13/04*(2021.01)i

FI: C25B13/08 301; C25B1/04; C25B9/00 A; C25B13/04 301; C25B13/02 301; C02F1/461 A

According to International Patent Classification (IPC) or to both national classification and IPC

**B. FIELDS SEARCHED**

Minimum documentation searched (classification system followed by classification symbols)

C25B1/00-15/80, C08J9/00-9/42, C02F1/461

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-204146 A (ASAHI KASEI CORP) 07 October 2013 (2013-10-07) claims, paragraphs [0035], [0039], [0057]-[0059], [0066], fig. 2(c) | 4-6 |
| A | | 1-2 |
| X | JP 2017-002389 A (KAWASAKI HEAVY IND LTD) 05 January 2017 (2017-01-05) claims, paragraphs [0010], [0054], [0057] | 3-6 |
| Y | | 3 |
| A | | 1-2 |
| Y | WO 2019/021774 A1 (NIPPON SHOKUBAI CO., LTD.) 31 January 2019 (2019-01-31) claims, paragraphs [0123]-[0126] | 3 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2022** | **22 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/034076**

| Patent document cited in search report | | | Publication date (day/month/year) | Patent family member(s) | | | Publication date (day/month/year) |
|---|---|---|---|---|---|---|---|
| JP | 2013-204146 | A | 07 October 2013 | (Family: none) | | | |
| JP | 2017-002389 | A | 05 January 2017 | US | 2018/0171494 | A1 | |
| | | | | claims, paragraphs [0014], [0066], [0070] | | | |
| | | | | WO | 2016/203701 | A1 | |
| | | | | EP | 3312306 | A1 | |
| | | | | CA | 2989389 | A | |
| | | | | CN | 107709622 | A | |
| | | | | CN | 112159989 | A | |
| WO | 2019/021774 | A1 | 31 January 2019 | US | 2021/0130967 | A1 | |
| | | | | claims, paragraphs [0216]-[0219] | | | |
| | | | | EP | 3660188 | A1 | |
| | | | | CN | 110945161 | A | |
| | | | | AU | 2018305973 | A | |

Form PCT/ISA/210 (patent family annex) (January 2015)

**REFERENCES CITED IN THE DESCRIPTION**

**Patent documents cited in the description**

•   WO 2019021774 A